(19) **Europäisches Patentamt European Patent Office Office européen des brevets**

(11) **EP 1 678 531 B1**

(12) **FASCICULE DE BREVET EUROPEEN**

(45) Date de publication et mention
de la délivrance du brevet:
**03.06.2009 Bulletin 2009/23**

(51) Int Cl.:
**G02B 5/18** $^{(2006.01)}$

(21) Numéro de dépôt: **04791228.2**

(86) Numéro de dépôt international:
**PCT/EP2004/052543**

(22) Date de dépôt: **14.10.2004**

(87) Numéro de publication internationale:
**WO 2005/038501 (28.04.2005 Gazette 2005/17)**

(54) **ELEMENTS D'OPTIQUE DIFFRACTIVE DE TYPE BINAIRE POUR UNE UTILISATION EN LARGE BANDE SPECTRALE**

BEUGENDES BINÄRES OPTISCHES ELEMENT ZUR VERWENDUNG IN EINEM GROSSEN SPEKTRALEN BEREICH

DIFFRACTIVE BINARY OPTICAL ELEMENT FOR USING IN A LARGE SPECTRAL RANGE

(84) Etats contractants désignés:
**DE FR GB**

(30) Priorité: **15.10.2003 FR 0312060**

(43) Date de publication de la demande:
**12.07.2006 Bulletin 2006/28**

(73) Titulaires:
• **Thales**
**92200 Neuilly Sur Seine (FR)**
• **CENTRE NATIONAL DE
LA RECHERCHE SCIENTIFIQUE
75016 Paris Cédex (FR)**

(72) Inventeurs:
• **LEE, Mane-Si Laure
94117 Arcueil Cedex (FR)**
• **LALANNE, Philippe
94117 Arcueil Cedex (FR)**
• **WOOD, Andrew Paul
94117 Arcueil Cedex (FR)**
• **SAUVAN, Christophe
94117 Arcueil Cedex (FR)**

(74) Mandataire: **Esselin, Sophie
Marks & Clerk France
Conseils en Propriété Industrielle
Immeuble " Visium "
22, avenue Aristide Briand
94117 Arcueil Cedex (FR)**

(56) Documents cités:
• **F.T.CHEN: "Diffractive phase elements based on two-dimensional artificial dielectrics" OPTICS LETTERS, vol. 20, no. 2, 15 janvier 1995 (1995-01-15), pages 121-123, XP002280474**
• **MAIT J N ET AL: "Design of binary subwavelength diffractive lenses by use of zeroth-order effective-medium theory" JOURNAL OF THE OPTICAL SOCIETY OF AMERICA. A, OPTICS AND IMAGE SCIENCE, XX, XX, vol. 16, no. 5, 1999, pages 1157-1167, XP002265606 ISSN: 0740-3232**
• **LALANNE P ET AL: "Design and fabrication of blazed binary diffractive elements with sampling periods smaller than the structural cutoff" JOURNAL OF THE OPTICAL SOCIETY OF AMERICA. A, OPTICS AND IMAGE SCIENCE, XX, XX, vol. 16, no. 5, mai 1999 (1999-05), pages 1143-1156, XP002252424 ISSN: 0740-3232**
• **LALANNE P ET AL: "BLAZED BINARY SUBWAVELENGTH GRATINGS WITH EFFICIENCIES LARGER THAN THOSE OF CONVENTIONAL ECHELETTE GRATINGS" OPTICS LETTERS, OPTICAL SOCIETY OF AMERICA, WASHINGTON, US, vol. 23, no. 14, 15 juillet 1998 (1998-07-15), pages 1081-1083, XP000783048 ISSN: 0146-9592**

**Description**

La présente invention concerne les éléments d'optique diffractive de type binaire, pour une utilisation dans des systèmes optiques scalaires, en particulier pour l'imagerie, dans le visible et dans l'infrarouge en particulier, l'infrarouge thermique.

Les éléments d'optique diffractive sont intéressants par rapport aux éléments d'optique réfractive, car ils offrent un gain en encombrement et en poids non négligeable, et en plus des propriétés optiques communes aux éléments optiques réfractifs, ils permettent la correction des aberrations dans les systèmes optiques.

La présente invention s'applique plus particulièrement au domaine scalaire, c'est à dire aux optiques qui dévient peu la lumière, ou encore à fonction de phase lentement variable avec ou sans discontinuité de phase.

Le processus de diffraction ne consiste pas dans une simple transmission dans une nouvelle direction d'un faisceau lumineux incident : le faisceau lumineux incident est divisé en plusieurs faisceaux, chacun redirigé sous un angle différent : dans un ordre de diffraction particulier. Le pourcentage de lumière incidente redirigée dans un ordre de diffraction donné est la mesure de l'efficacité de diffraction dans cet ordre. L'efficacité de diffraction d'un élément d'optique diffractive est déterminée par le profil de surface de cet élément.

Si le pourcentage de lumière qui n'est pas redirigée dans l'ordre de diffraction désiré est substantiel, cela se traduit par une lumière parasite transmise, qui est néfaste à la qualité de l'imagerie.

Pour optimiser l'efficacité avec laquelle est redirigée le faisceau incident vers un seul ordre de diffraction, il est ainsi nécessaire que la structure de l'élément d'optique diffractive soit blazée, c'est-à-dire qu'il n'y ait pas ou peu de lumière diffractée dans les autres ordres que l'ordre désiré, appelé ordre de blaze.

Dans les éléments d'optique diffractive classiques tels que les lentilles de Fresnel et les réseaux à échelette ou multi-niveaux, l'effet de blaze recherché est obtenu par une variation progressive de la profondeur d'un matériau d'indice constant. Le profil de surface de ces éléments consiste ainsi en des reliefs continus séparés par des discontinuités. Ces éléments sont conçus pour une certaine longueur d'onde, dite longueur d'onde de conception, notée $\lambda_0$.

Ces éléments présentent une limitation importante à leur utilisation, car ils ne sont en pratique blazés qu'à la longueur d'onde de conception. A la longueur d'onde conception, l'efficacité de diffraction est de 100% aux pertes de Fresnel près, mais dès que la longueur d'onde de la lumière incidente s'écarte de cette valeur nominale, l'efficacité dans l'ordre de blaze (ordre 1) chute considérablement.

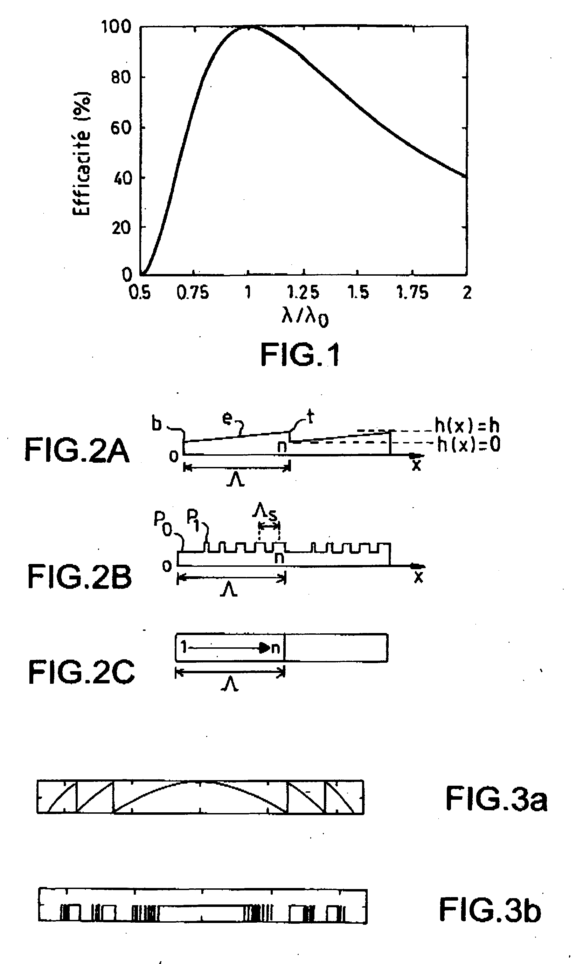

C'est ce qui est représenté sur la figure 1, qui montre la courbe d'efficacité de diffraction en fonction de la longueur d'onde incidente, pour des éléments d'optique diffractive définis dans le domaine scalaire, c'est à dire pour des éléments qui dévient peu la lumière. Dans le domaine scalaire, on peut en effet montrer que l'efficacité de diffraction en fonction de la longueur d'onde de tout élément d'optique diffractive blazé dans l'ordre 1 est donnée par l'équation suivante :

$$\eta(\lambda) = \operatorname{sinc}^2\left[\pi\left(1 - \frac{\lambda_0}{\lambda}\right)\right] \quad \text{Eq(1)}$$

où $\operatorname{sinc}(x) = \dfrac{\sin(x)}{x}$, dont la courbe 1 est la représentation graphique

La lumière perdue dans l'ordre de blaze (ordre 1) est transmise dans des ordres supérieurs. Si on prend l'exemple d'une lentille hybride, ce phénomène se traduit par la transmission d'une lumière parasite, qui est néfaste à la qualité de l'imagerie. Cela se traduit de façon pratique par l'apparition de lumière diffractée dans l'ensemble du plan image. Par exemple, l'image en sortie n'est pas nette, ou est terne.

On montre que cette chute d'efficacité provient de la faible dispersion du matériau, qui entraîne que pour une faible différence de longueur d'onde, la différence de phase $\Delta\varphi(\lambda)$ induite dans la structure s'écarte de $2\pi$, alors qu'elle est de $2\pi$ à la longueur d'onde de conception $\lambda_0$ ou de blaze.

Par exemple, si on considère le réseau à échelette $R_E$ représenté sur la figure 2a, $\Delta\varphi(\lambda)$ représente la différence de phase entre le bas b et le haut t d'un échelon e du réseau $R_E$. Cette différence vaut $2\pi$ pour une lumière incidente à $\lambda_0$.

Dans l'approximation scalaire, en négligeant les pertes de Fresnel, et en se plaçant en incidence normale du faisceau incident, la différence de phase en fonction de la longueur d'onde $\Delta\varphi(\lambda)$ et l'efficacité en fonction de la longueur d'onde $\eta(\lambda)$ sont en effet données par :

$$\Delta\varphi(\lambda) = 2\pi \frac{\lambda_0}{\lambda} \frac{\Delta n(\lambda)}{\Delta n(\lambda_0)} \quad \text{Eq.(2)}$$

$$\eta(\lambda) = \operatorname{sinc}^2\left[\pi\left(1 - \Delta\varphi(\lambda)/2\pi\right)\right] , \qquad \text{Eq.(3)}$$

où $\Delta n(\lambda) = (n(\lambda) - n_{air}$ soit $(n(\lambda) - 1)$, pour un élément d'optique diffractive gravé dans un matériau d'indice de réfraction n.

Pour ces éléments d'optique diffractive, on peut considérer que $\Delta n(\lambda) = \Delta n(\lambda_0)$, car la dispersion du matériau est négligeable : l'indice de réfraction varie peu autour de $\lambda_0$.

Eq (2) devient donc :

$$\Delta\varphi(\lambda) = 2\pi \frac{\lambda_0}{\lambda} \qquad \text{Eq.(4)}$$

et on obtient équation Eq(1) vue plus haut et représentée sur la figure 1, en remplaçant $\Delta\varphi(\lambda)$ par cette expression dans Eq(3).

Ainsi la faible dispersion du matériau optique dans les éléments d'optique diffractive classiques, entraîne une chute d'efficacité de la diffraction avec la longueur d'onde $\lambda \neq \lambda_0$ exprimée par l'équation Eq (1). Ces éléments d'optique diffractive classiques ne sont donc pas à large bande spectrale. On ne peut pas les utiliser dans les systèmes optiques dédiés à des applications à large bande spectrale, tels que des systèmes optiques hybrides, composés d'optiques réfractives et diffractives.

On connaît d'autres éléments d'optique diffractive, dits à microstructure binaire, encore appelés réseaux blazés binaires, ou éléments d'optique diffractive sub-longueur d'onde (SWDOE : "*SubWavelength Diffractive Optic Element*). Ces réseaux blazés binaires sont en fait une synthèse binaire d'un élément d'optique diffractive classique : on part de l'élément d'optique diffractive classique que l'on veut synthétiser et on échantillonne ce réseau pour obtenir des points, auxquels on peut associer une valeur d'indice ou de déphasage. L'échantillonnage doit se faire à une période inférieure à la longueur d'onde de conception, pour obtenir un réseau fonctionnant en régime sub-longueur d'onde. Les diverses techniques de calcul utilisées sont connues de l'homme du métier et ne seront pas rappelées ici. Ces techniques permettent, par exemple, pour un réseau blazé à échelettes tel que le réseau $R_E$ représenté sur la figure 2a, de définir un réseau blazé binaire comme représenté à la figure 2b. Si on reprend la figure 2a, deux échelons d'un réseau à échelettes $R_E$ de période A (ou pas du réseau) sont représentés. Ces échelons sont gravés dans un matériau optique d'indice n.

Un réseau blazé binaire correspondant au réseau $R_E$ de la figure 2a est représenté sur la figure 2b. Le réseau $R_E$ est échantillonné à la période $\Lambda_s$ choisie inférieure à la longueur d'onde de conception $\lambda_0$, On obtient un certain nombre de points pour chaque période $\Lambda$ du réseau. A chaque point on fait correspondre un facteur de remplissage donné pour un type de microstructure donné (trou, pilier) : ce facteur de remplissage est égal à la dimension d de la microstructure rapportée à la période d'échantillonnage du réseau : $f = d/\Lambda_s$. Le facteur de remplissage de chaque microstructure est défini, par des calculs connus, pour donner localement une valeur de déphasage $\Phi(x)$ semblable à celle du réseau échelette au point échantillonné, et égale de manière connue à $\Phi(x) = 2\pi(n-1)h(x)\dfrac{1}{\lambda}$, où x est la coordonnée du point échantillonné sur l'axe 0x du réseau.

Dans l'exemple de la figure 2b, les microstructures binaires sont de type pilier. On obtient un ensemble de microstructures binaires qui codent le motif à échelon du réseau. Cet ensemble de microstructures se répète à la période A du réseau à échelette de la figure 2a.

Dans l'opération de synthèse, on définit donc un facteur de remplissage f pour chaque microstructure qui varie d'une microstructure à l'autre pour suivre la fonction de phase du réseau à échelette. Dans l'exemple, sur chaque période A du réseau échelette (pour chaque échelon), cette dimension d augmente avec x. En pratique, le facteur de remplissage f d'une microstructure binaire du réseau peut prendre toute valeur réelle comprise entre 0 et 1, y compris les valeurs 0 et 1. Par exemple, pour le pilier $p_0$ sur la figure 2c, le facteur de remplissage est 0.

Sur les figures 3a et 3b on a représenté un élément d'optique diffractive classique de type lentille de Fresnel (figure 3a), et sa synthèse binaire au moyen de microstructures (figure 3b).

Pour décrire le comportement d'un élément d'optique diffractive binaire, on introduit une notion d'indice effectif pour décrire l'interaction de la lumière sur les microstructures. Avec cette notion, on assimile la structure de l'élément à un matériau artificiel homogène, comparable à un réseau à gradient d'indice effectif, dont l'indice effectif varie sur la période A (ou la portion) du réseau considéré. La figure 2c représente schématiquement un réseau à gradient d'indice effectif correspondant au réseau blazé binaire de la figure 2b.

Cette notion d'indice effectif et des formules analytiques permettant de le calculer sont décrites en détail dans différentes publications, parmi lesquelles on peut citer la suivante : "On the effective medium theory of subwavelength periodic structures", Journal of Modern Optics, 1996, vol.43, N° 10, 2063-2085 par Ph. Lalanne, D. Lemercier-Lalanne, qui montre notamment les courbes de variation d'indice effectif avec le facteur de remplissage et de la longueur d'onde incidente (p 2078).

En pratique, l'indice effectif est fonction du facteur de remplissage f (et donc de la période d'échantillonnage $\Lambda_s$), de la géométrie de la microstructure, de l'indice n du matériau (ou, ce qui est équivalent, de sa permittivité $\varepsilon$) et de la longueur d'onde incidente $\lambda$. Différentes formules analytiques sont ainsi connues de l'homme du métier, qui permettent de calculer, pour un matériau artificiel donné, les courbes de variation de l'indice effectif en fonction du facteur de remplissage f des microstructures (donc en fonction de d et $\Lambda_s$) et en fonction de la longueur d'onde incidente $\lambda$.

En pratique, cette notion est valable dans tous les cas où la période d'échantillonnage $\Lambda_s$ est inférieure à la valeur de coupure structurelle de l'élément, donnée par $\dfrac{\lambda_0}{n}$ , où n est l'indice de réfraction du matériau optique. La notion de valeur de coupure structurelle ("*structural cut-off*") est notamment décrite dans la publication intitulée "Blazed-Binary subwavelength gratings with efficiencies larger than those of conventional échelette gratings" de Ph. Lalanne, S. Astilean, P. Chavel, E. Cambril et H. Launois publiée dans Optical Letters, vol.23, pp552-554 en 1998. Ce paramètre donne la limite de valeur de la période d'échantillonnage au-delà de laquelle, pour tout facteur de remplissage, le matériau ne se comporte plus comme un matériau homogène (couche mince), et pour lequel on ne travaille plus en régime sub-longueur d'onde. Au-delà de cette valeur, on a plusieurs modes de propagation, et plusieurs indices effectifs.

On se place donc dans des conditions de propagation sub-longueur d'onde avec $\Lambda_s \leq \lambda_0$, de préférence dans les conditions où $\Lambda_s \leq \dfrac{\lambda_0}{n}$ . En pratique on choisit généralement $\Lambda_s = \lambda_0/2$ ou $\lambda_0/3$.

Dans ces conditions, l'effet de blaze (c'est à dire la diffraction de la lumière incidente dans un seul ordre de diffraction, l'ordre de blaze) est donc obtenu par variation de l'indice optique le long de la surface du matériau optique. En effet, les microstructures sont trop petites (sub-longueur d'ondes) pour être résolues par la lumière incidente (en terme de champ lointain en diffraction) qui perçoit localement, un indice moyen, l'indice effectif.

En pratique, pour une structure à une dimension, les microstructures peuvent être des traits, ou des sillons.

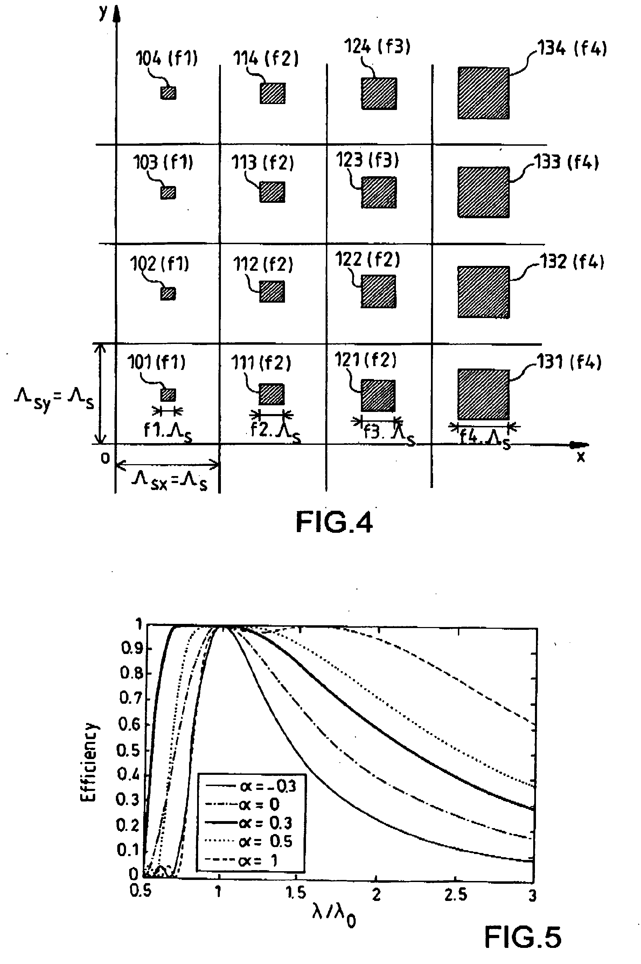

Dans une structure à deux dimensions, les microstructures habituelles ont des géométries de type trou, par exemple cylindrique, ou pilier, par exemple à section ronde, carrée ou rectangulaire. Elles sont disposées selon un réseau périodique, à la période d'échantillonnage $\Lambda_s$ au moins sur la direction 0x du plan de surface du réseau. Dans l'exemple de réseau 2D représenté à la figure 4 de façon schématique, la maille est carrée de dimensions $\Lambda_{sx} = \Lambda_{sy} = \Lambda_s$. On a ainsi une microstructure par maille, par exemple au centre de chaque maille. Les microstructures alignées selon la direction 0x du plan de surface du réseau, telles que les microstructures 101, 111, 121, 131 sont affectées d'un facteur de remplissage variant progressivement dans un ordre déterminé, croissant ou décroissant le long de la direction principale 0x du réseau.

Dans le cas d'une synthèse d'un réseau de type à échelette (ou multi-niveaux), les microstructures alignées selon l'autre dimension 0y du réseau,
telles que les microstructures 101 à 104, ont un facteur de remplissage identique.

Dans le cas (non représenté ici), d'une synthèse de zones d'une lentille de Fresnel, le facteur de remplissage de ces microstructures peut varier dans toutes les directions.

Ces éléments d'optique diffractive blazés binaires sont connus pour présenter des efficacités bien supérieures à celles des optiques classiques, et sont utilisés dans le cas de réseaux à forte dispersion ou pour des lentilles hybrides à forte ouverture numérique.

On connaît de la publication ayant pour titre " Diffractive phase éléments based on two dimensionnal artificial dielectrics", de F.T. Chen et H.G. Craighead, Optic Letters, Vol.20, N°2, des EOD réalisés avec des trous et piliers à facteur de remplissage variable, définis pour une longueur d'onde.

Dans l'invention, on s'est intéressé à ces éléments blazés binaires pour une autre raison : on s'est aperçu que le matériau artificiel ainsi formé présentait une forte dispersion, avec la longueur d'onde, de l'indice effectif de réfraction vu localement au niveau de chaque microstructure, contrairement aux éléments d'optique diffractive classique pour lesquels la dispersion est la dispersion naturelle du matériau.

L'idée à la base de l'invention a été de mettre à profit cette forte dispersion des matériaux artificiels pour compenser la variation de l'efficacité de diffraction en fonction de la longueur d'onde du faisceau incident, dans le but d'obtenir des éléments d'optique diffractive blazés sur une large bande spectrale, c'est-à-dire des éléments d'optique diffractive efficaces dans leur ordre de blaze sur une large gamme spectrale. En d'autres termes on a cherché à utiliser cette forte dispersion du matériau artificiel pour obtenir des éléments d'optiques diffractive quasi-achromatiques et à grande efficacité de diffraction.

Dans l'invention, on a pu montrer que l'utilisation de deux géométries de microstructures différentes, comme des trous et des piliers, permettait d'utiliser au mieux cette dispersion pour compenser les effets de la variation de longueur d'onde.

Dans l'invention, on a pu identifier un paramètre caractéristique de la structure optique résultante, et définir une valeur d'optimisation de ce paramètre pour laquelle le réseau offre une largeur spectrale optimum.

Dans l'invention, on a ainsi pu obtenir un élément d'optique diffractive binaire ayant une très bonne efficacité de diffraction dans l'ordre de blaze sur une large bande spectrale, grâce aux propriétés de dispersion du matériau artificiel.

L'invention concerne donc un élément d'optique diffractive de type binaire suivant la revendication 1.

Selon un mode de réalisation de l'invention, l'élément optique diffractif peut comprendre en outre une ou des zones formées uniquement de microstructures selon l'une parmi la première ou la deuxième géométrie.

Le matériau optique est de préférence à indice de réfraction n élevé. Dans un mode de réalisation correspondant à une synthèse binaire d'un réseau échelette de période A déterminée, chaque zone optique de la microstructure correspond à un échelon du réseau échelette.

Dans un mode de réalisation correspondant à une synthèse binaire d'une lentille de Fresnel, chaque zone optique dudit élément correspond à une zone de Fresnel.

Un élément d'optique comprenant des zones de microstructures avec les caractéristiques particulières de invention permet son utilisation dans des systèmes d'imagerie à large bande spectrale, ou bi-bande spectrale notamment dans des systèmes d'imagerie infrarouge, en particulier infrarouge thermique, et dans le domaine du visible.

D'autres avantages et caractéristiques de l'invention apparaîtront plus clairement à la lecture de la description qui suit, faite à titre indicatif et non limitatif de l'invention et en référence aux dessins annexés, dans lesquels :

- la figure 1 déjà décrite illustre l'efficacité de diffraction d'un élément d'optique diffractive classique, en fonction du rapport de la longueur d'onde d'illumination sur la longueur d'onde nominale;
- les figures 2a, 2b et 2c déjà décrites illustrent respectivement un élément d'optique diffractive classique à échelette, du type réseau à échelette, une synthèse binaire de cet élément, au moyen de microstructures de type pilier; et la représentation d'un réseau à gradient d'indice effectif correspondant :
- les figures 3a, 3b déjà décrites illustrent respectivement un élément d'optique diffractive classique du type à lentilles de Fresnel, et une synthèse binaire de cet élément, au moyen de microstructures de type pilier ;
- la figure 4 déjà décrite représente schématiquement un réseau maillé 2D de microstructures binaires ;
- la figure 5 représente l'efficacité de diffraction d'un élément d'optique diffractive binaire, pour différentes valeurs d'un paramètre de caractérisation $\alpha$ ;
- les figures 6a et 6b illustrent, pour une zone d'élément optique diffractive de type binaire, à microstructures de type trou cylindrique (figure 6a), l'indice effectif en fonction de la dimension d de ces microstructures rapportée à la période d'échantillonnage, pour la longueur d'onde de conception et pour une longueur d'onde limite (figure 6b) ;
- les figures 7a et 7b illustrent, pour une zone d'élément optique diffractive de type binaire, à microstructures de type pilier carré (figure 7a), l'indice effectif en fonction de la dimension d de ces microstructures rapportée à la période d'échantillonnage, pour la longueur d'onde de conception et pour une longueur d'onde limite (figure 7b) ;
- la figure 8 illustre la courbe de variation d'indice effectif associée à une structure à deux géométries selon l'invention ;
- la figure 9a illustre une telle structure à deux géométries et la figure 9b montre une courbe d'efficacité de diffraction correspondante ;
- les figures 10a et 10b montrent schématiquement la synthèse selon une mise en oeuvre de l'invention, d'un élément d'optique diffractive du type réseau à échelette ;
- les figures 10c et 10d montrent schématiquement la synthèse selon une mise en oeuvre de l'invention, d'un élément d'optique diffractive du type à lentilles de Fresnel ;
- la figure 11 montre un autre exemple de réalisation d'un élément d'optique diffractive binaire selon l'invention, réalisé selon un réseau périodique à maille hexagonale ;
- les figures 12a à 12c illustrent différents modes de fabrication de tels éléments et
- la figure 13 montre l'utilisation d'une couche anti-reflet.

On rappelle que dans l'invention, on s'est plus particulièrement intéressé au domaine scalaire, et que dans la suite, on a utilisé les approximations scalaires correspondantes et les formules analytiques définies dans ce domaine. Mais l'invention s'applique au-delà de ce domaine. Elle permet d'obtenir des composants à bande spectrale plus large que les composants de l'état de la technique.

Ces conditions rappelées, l'équation Eq(2) définissant la différence de phase en fonction de la longueur d'onde pour les éléments d'optique est applicable dans le domaine scalaire. Elle est donc applicable pour décrire la variation de phase dans les réseaux blazé binaires.

On va montrer que l'indice effectif varie avec la longueur d'onde, de façon non négligeable. En d'autres termes, que le matériau artificiel créé à partir d'un matériau optique, avec des microstructures binaires de dimension d variable, à la période d'échantillonnage $\Lambda_s$, est un matériau à forte dispersion d'indice effectif.

On va aussi montrer que la variation de phase donnée par Eq(2) en fonction de la longueur d'onde dépend alors de la variation de la longueur d'onde et de la variation de l'indice effectif, et qu'il est possible de définir une structure d'élément d'optique diffractive binaire dans laquelle ces variations se compensent, pour fournir ainsi un élément à large bande spectrale ou achromatique.

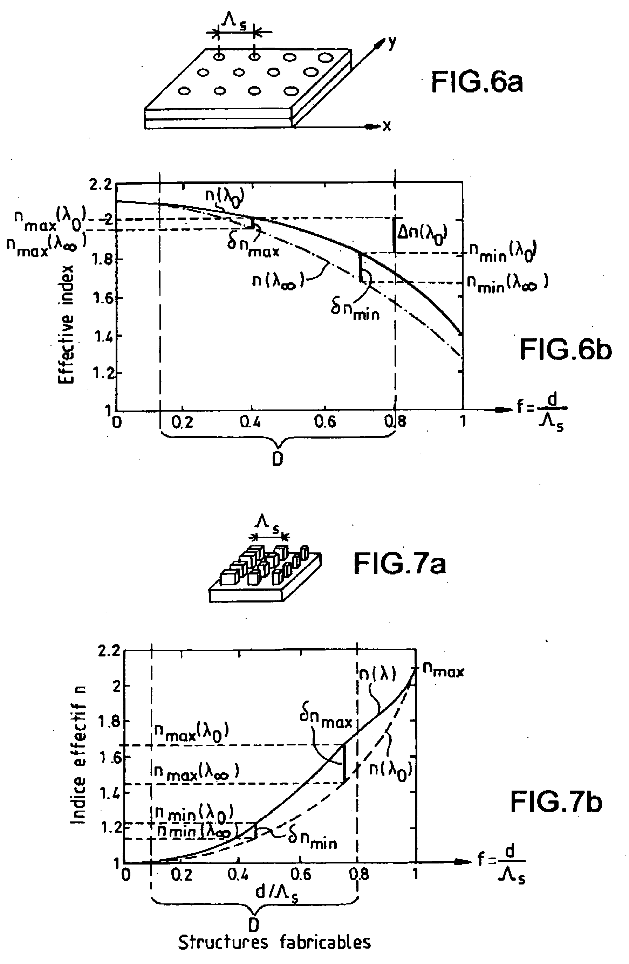

En effet, dans un élément d'optique diffractive blazé binaire, pour la plupart des facteurs de remplissage associés aux microstructures, la dispersion de l'indice de réfraction effectif en fonction de la longueur d'onde n'est pas négligeable, comme il ressort des figures 6b et 7b, qui montrent les courbes de variation de l'indice effectif en fonction du facteur de remplissage $f = d/\Lambda_s$ des microstructures d'une structure bidimensionnelle représentée respectivement sur les figures 6a et 7a.

Dans l'exemple de la figure 6a, les microstructures sont de type trou cylindrique, à section ronde, de dimension (diamètre) d variable, disposées selon un réseau à maille carrée de dimensions $\Lambda s_x = \Lambda S_y = \Lambda s$. Dans l'exemple, $\Lambda s = \lambda_0/2$, et le matériau optique à un indice n=2,1 (As n'est donc pas en toute rigueur en dessous de la valeur de coupure structurelle sensiblement égale $\lambda_0/n$, soit ici $\Lambda_0/2,1$ -on verra plus loin les implications pratiques).

La courbe en trait continu, correspond à une lumière incidente à la longueur d'onde de conception $\lambda_0$ et la courbe en tirets correspond à une lumière incidente à une longueur d'onde $\lambda_\infty$ "infinie" c'est à dire très grande devant $\Lambda_0$. Dans l'exemple $\lambda_\infty = 50.\lambda_0$.

Sur la figure 7b, ce sont les courbes de mesure de l'indice effectif en fonction du facteur de remplissage des microstructures d'une structure bidimensionnelle représentée sur la figure 7a. Dans cet exemple, les microstructures sont de type pilier, à section carrée, de largeur d variable, disposées selon un réseau à maille carrée de dimensions $\Lambda S_x = \Lambda s_y = As$. Dans l'exemple, $As = \lambda_0/2$, et le matériau optique à un indice n=2,1.

La courbe en trait continu, correspond à une lumière incidente à la longueur d'onde nominale (de conception) $\lambda_0$ et la courbe en tirets correspond à une lumière incidente à une longueur d'onde $\lambda_\infty$ "infinie" c'est à dire très grande devant $\lambda_0$ (de conception). Dans l'exemple $\lambda_\infty = 50.\lambda_0$.

La variation d'indice effectif à une longueur d'onde $\lambda$ en fonction du facteur de remplissage des microstructures dans un élément d'optique binaire tel que par exemple, l'élément représente sur la figure 6a, à base de microstructures de type trou ou l'élément représenté sur la figure 7a, à base de microstructures de type pilier, peut s'écrire :

$$\Delta n(\lambda) = n_{max}(\lambda) - n_{min}(\lambda)$$

où $n_{max}$ correspond à l'indice effectif du milieu artificiel correspondant à la plus petite fraction de matériau enlevé, pour réaliser la microstructure considérée, soit le plus petit trou (figure 6a) ou le plus grand pilier (figure 7a) et où $n_{min}$ correspond à l'indice effectif du milieu artificiel correspondant à la plus grande fraction de matériau enlevé soit le plus grand trou (figure 6a) ou le plus petit pilier (figure 7a).

La dispersion de cet indice effectif. $\delta n_{min}$ aux valeurs minimum et $\delta n_{max}$ aux valeurs maximum de cet indice s'écrit :

$$\delta n_{min} = n_{min}(\lambda_0) - n_{min}(\lambda_\infty)$$

et

$$\delta n_{max} = n_{max}(\lambda_0) - n_{max}(\lambda_\infty).$$

Ainsi, pour l'élément de la figure 6a dans lequel la géométrie des microstructures est de type trou, c'est à dire que le matériau est enlevé à l'emplacement même des microstructures, $n_{max}$ est donné par la microstructure de dimension d la plus petite, dans l'exemple, de dimension $d=0,4\Lambda_s$ et vaut environ 2,02 à $\lambda_0$ et 1,95 à $\lambda_\infty = 50\lambda_0$ et $n_{min}$ est donné par la microstructure de dimension d la plus grande, dans l'exemple, de dimension $d=0,7\Lambda_s$ et vaut environ 1,82 à $\lambda_0$ et 1,66 à $\lambda_\infty$. On a alors $\delta n_{min}=1,82-1,66=0,16$ et $\delta n_{max}=2,02-1,95=0,07$.

Ici la plus grande quantité de matériau enlevé correspond à un trou de la plus grande dimension; la plus petite quantité de matériau enlevé correspond à un trou de plus petite dimension. Ainsi, $\delta n_{min}$ donne la dispersion de la plus grande structure de trou et $\delta n_{max}$ la dispersion de la plus petite structure de trou.

Ces dispersions ne sont pas négligeables.

Pour l'élément de la figure 7a dans lequel la géométrie des microstructures est de type pilier, c'est à dire que le matériau est enlevé autour de l'emplacement des microstructures, $n_{max}$ est donné par la microstructure de dimension d la plus grande, dans l'exemple, de dimension $d=0,75\Lambda_s$ et vaut environ 1,68 à $\lambda_0$ et 1,44 à $\lambda_\infty = 50\lambda_0$ et $n_{min}$ est donné

par la microstructure de dimension d la plus petite, dans l'exemple, de dimension $d=0,46\Lambda_s$ et vaut environ 1,22 à $\lambda_0$ et 1,14 à $\lambda_\infty=50\lambda_0$.

On a alors $\delta n_{min}=1,22-1,14=0,08$ et $\delta n_{max}=1,68-1,44=0,24$.

Ici la plus grande quantité de matériau enlevé correspond à un pilier de la plus petite dimension; la plus petite quantité de matériau enlevé correspond à un pilier de plus grande dimension. Ainsi, $\delta n_{min}$ donne la dispersion de la plus petite structure de pilier et $\delta n_{max}$ la dispersion de la plus grande structure de pilier.

Ces dispersions ne sont pas négligeables.

Il est important de noter que seules les plus grandes et plus petites microstructures (non nulles, c'est à dire avec f ($=d/\Lambda_s$) ≠0) doivent être prises en compte dans le modèle.

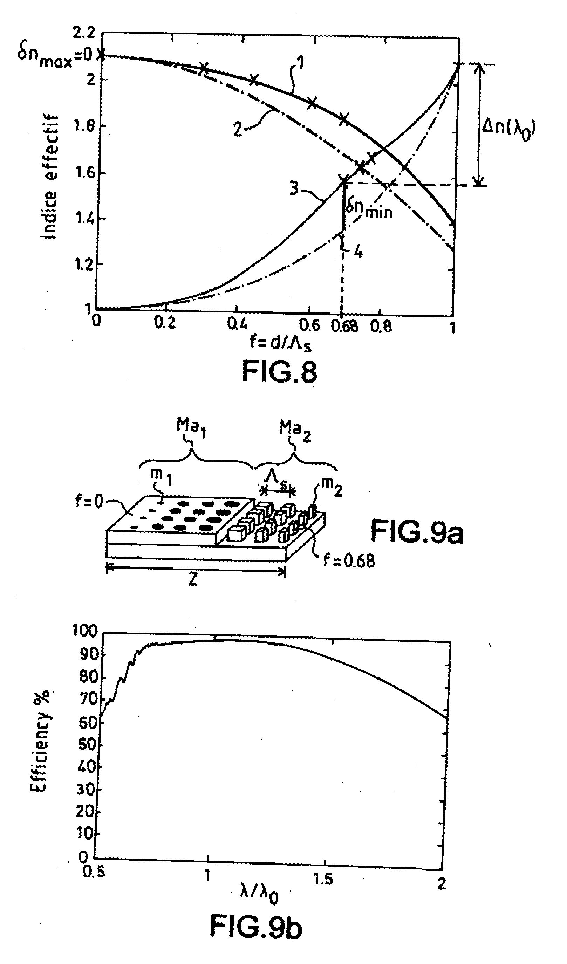

Dans l'invention, et comme représenté sur la figure 8 et la figure 9a, on a eu l'idée de combiner les deux géométries qui ont des propriétés de variations d'indice effectif inverses, pour utiliser au mieux les dispersions associées aux deux géométries et améliorer ainsi le comportement spectral.

Ainsi, et comme représenté sur la figure 9a, la variation progressive d'indice effectif le long de la direction 0x du plan de surface du réseau est obtenue en codant les faibles indices par des microstructures de géométrie de type pilier dont le facteur de remplissage augmente progressivement, et à coder les plus forts indices par des microstructures de géométrie de type trou, dont le facteur de remplissage décroît progressivement. Dans la zone de transition entre les microstructures de géométrie de type trou et les microstructures de géométrie de type pilier, ces microstructures ont un facteur de remplissage du même ordre de grandeur.

En pratique, les microstructures de type trou sont obtenues de la façon suivante : sur un substrat optique, une couche de matériau de fort indice n est déposée, et gravée, pour former les trous. Dans les trous, on a de l'air : soit un indice faible, égal à 1. Ailleurs on a un indice fort. On peut donc décrire le matériau artificiel obtenu Ma$_1$ (figure 9a) comme un matériau d'indice fort avec des insertions d'indice faible correspondants aux microstructures. La variation d'indice effectif et sa dispersion sont représentées par les courbes 1 et 2 de la figure 8.

Les microstructures de type pilier sont obtenues de la façon suivante : sur un substrat optique, une couche de matériau de fort indice n est déposée, et gravée, pour enlever le matériau sauf à l'emplacement des piliers. Autour des piliers on a de l'air. Les piliers sont dans un matériau d'indice fort. Dans le cas de réseaux 1D. avec des traits, ces traits peuvent être réalisés directement par impression sur le substrat optique (il n'y a pas de gravure dans ce cas). On peut donc décrire le matériau artificiel obtenu Ma$_2$ comme un matériau d'indice faible avec des insertions d'indice fort correspondant aux microstructures. La variation d'indice effectif et sa dispersion sont représentées par les courbes 3 et 4 de la figure 8.

Ainsi, comme représenté sur la figure 9a, une zone Z d'un élément optique binaire selon l'invention comprend un matériau artificiel composite comprenant un premier matériau artificiel Ma$_1$ comprenant un matériau d'indice fort avec des insertions de matériau d'indice faible formant les microstructures m$_1$ et un deuxième matériau artificiel Ma$_2$ comprenant, un matériau d'indice faible avec des insertions de matériau d'indice fort formant les microstructures m$_2$, les microstructures m$_1$ du premier matériau artificiel Ma$_1$ codant les valeurs plus fortes de l'indice effectif et les microstructures m$_2$ du deuxième matériau artificiel Ma$_2$ codant les valeurs plus faibles de l'indice effectif du matériau artificiel composite.

La variation et la dispersion d'indice effectif du matériau artificiel composite suit alors les portions des courbes 1, 2, 3, 4 en fonction des microstructures réellement codées.

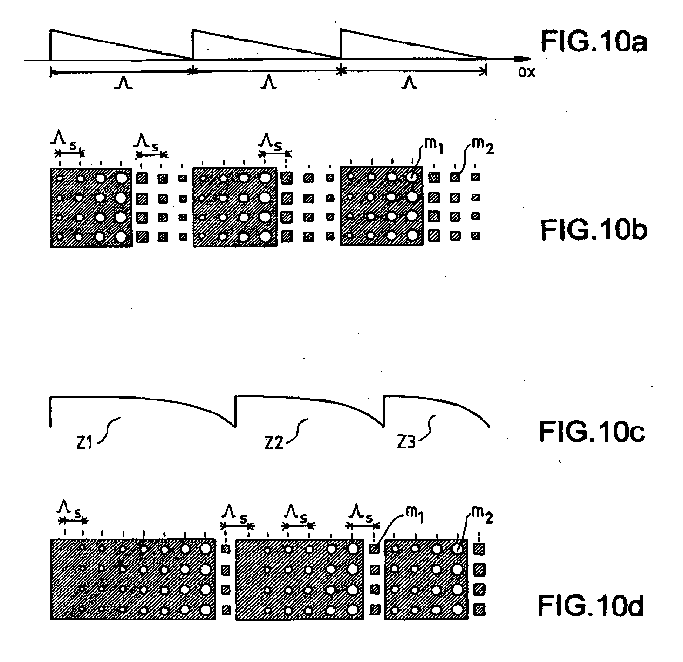

Une application de l'invention pour synthétiser un réseau de type à échelette de période A est représentée sur les figures 10a et 10b. Une structure de matériau composite est définie à une période d'échantillonnage $\Lambda_s$ et cette structure se répète à la période A du réseau.

Une autre application de l'invention pour des zones z1, z2 et z3 d'une lentille de Fresnel est représentée sur les figures 10c et 10d. Une structure particulière de matériau composite est définie pour chaque zone à une période d'échantillonnage $\Lambda_s$.

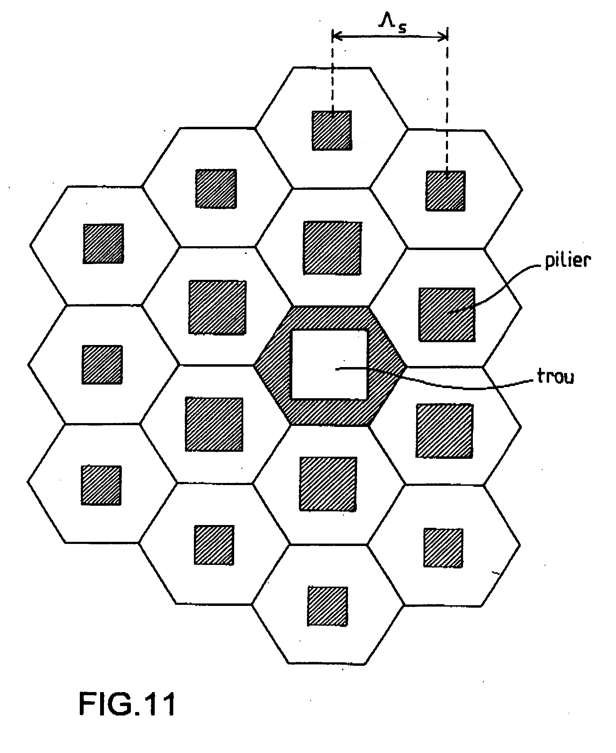

La figure 11 montre un autre exemple de réalisation dans laquelle la maille n'est plus carrée, mais hexagonale, pour coder une zone d'une lentille de Fresnel. On voit un trou au centre, dans l'exemple, un trou carré, et des piliers tout autour, de surface variable, rapportée à la surface de la maille. L'indice effectif varie ainsi dans toutes les directions, pour coder la variation de phase de la lentille.

Dans le cas où la maille du réseau n'est plus carrée, mais rectangulaire, ou hexagonale comme sur la figure 11, ou bien dans le cas où les microstructures ne sont plus à sections rondes ou carrées, mais par exemple à sections rectangulaires ou autres, le facteur de remplissage ne se définit plus comme le rapport d'une dimension d de la microstructure à une dimension $\Lambda_s$ de la maille, mais comme un rapport de leurs surfaces respectives: la surface de la microstructure rapportée à la surface de la maille. On prend selon le cas, la définition appropriée du facteur de remplissage.

Par ailleurs, on peut avoir de légères variantes, selon lesquelles la dimension de telle ou telle maille est localement modifiée, c'est à dire localement différente de la période d'échantillonnage, ou bien la position dans une maille d'une microstructure est localement modifiée, par rapport à la position générique, par exemple le centre de la maille, dans le but d'optimiser au mieux la structure.

Ces exemples montrent notamment que le choix des points codés dépend aussi de la fonction de phase à réaliser. Dans le cas du réseau à échelette, la fonction de phase est linéaire et les facteurs de remplissage des microstructures utilisées dans le matériau artificiel composite varient sensiblement linéairement. Pour une zone de lentille de Fresnel, cette variation n'est plus aussi "linéaire".

Un autre aspect important de l'invention, est l'optimisation des structures de matériau artificiel, pour avoir une bande spectrale optimum, la plus large possible.

En tenant compte de la dispersion de l'indice effectif dans équation Eq.(2) de variation de phase, on a pu montrer qu'il existe un paramètre de caractérisation de la structure, que l'on note $\alpha$ et qui s'écrit:

$$\alpha = \frac{(\delta n_{min} - \delta n_{max})}{\Delta n(\lambda_0)}, \qquad \text{Eq.(5)}$$

et que l'équation Eq(2) de variation de phase en fonction de la longueur d'onde peut alors s'écrire :

$$\Delta \phi(\lambda) = 2\pi \left[ (1+\alpha)(\lambda_0 / \lambda) - \alpha (\lambda_0 / \lambda)^3 \right] \qquad \text{Eq.(6)}$$

On a ainsi pu établir que la variation de phase avec la longueur d'onde dans un élément d'optique diffractive blazée binaire ne dépend au premier ordre que d'un paramètre $\alpha$ caractéristique de la structure.

Ainsi, pour avoir un élément d'optique diffractive binaire achromatique, il faut optimiser le paramètre $\alpha$ de caractérisation de la structure, qui ne dépend que des 3 quantités $\delta n_{min}$, $\delta n_{max}$ et $\Lambda n(\lambda_0)$ déjà définies.

L'étude de l'équation Eq.(6) montre que pour $\alpha = 0$, la différence de phase est la même que celle des EOD classiques, soit $\Delta\Phi(\lambda) = 2\pi(\lambda_0/\lambda)$ Eq.(4). Ainsi, pour des structures binaires pour lesquelles le paramètre de caractérisation $\alpha$ est égal à 0, l'efficacité de la diffraction suit la même courbe de variation avec $\lambda$ que les éléments d'optique diffractive classiques. C'est ce qui apparaît sur la figure 5, qui montre les courbes d'efficacité de diffraction $\eta(\lambda)$ en fonction de la différence de phase avec la longueur d'onde donnée par Eq.(6), pour différentes valeurs de $\alpha$, d'après l'équation Eq(3) vue précédemment : $\eta(\lambda) = \text{sinc}^2[\pi(1-\Delta\varphi(\lambda)/2\pi)]$, Eq.(3)

Dans l'invention, on cherche à résoudre équation correspondant à un élément d'optique diffractive binaire achromatique, c'est à dire à résoudre $\Delta\Phi(\lambda) = 2\pi$. Cette équation $\Delta\Phi(\lambda) = 2\pi$ peut avoir plusieurs racines, dépendant de la valeur de $\alpha$, comme représenté sur la figure 5 :

- Pour $\alpha < 0$, l'équation n'a qu'une seule racine $\lambda = \lambda_0$ ; l'efficacité de diffraction varie alors de façon encore plus abrupte avec $\lambda$ s'éloignant de $\lambda_0$, comme représenté sur la figure 5, pour $\alpha = -0,3$. En d'autres termes, pour $\alpha < 0$, l'efficacité est plus restreinte que pour $\alpha = 0$.
- Pour $\alpha > 0$, l'équation a toujours deux racines $\lambda_1 \leq \lambda_0 \leq \lambda_2$.

Plus la valeur de $\alpha$ est élevée, plus les deux longueurs d'onde $\lambda_1$ et $\lambda_2$ sont distantes. Ce qui constitue une propriété intéressante en terme de largeur de bande. Si les 2 longueurs d'ondes sont proches, la différence de phase restera proche de $2\pi$ au moins sur la bande spectrale délimitée par $\lambda_1$ et $\lambda_2$, ce qui signifie que le composant est biazé sur une plus large bande spectrale qu'un élément d'optique diffractive classique. C'est ce que montre sur la figure 5, les courbes d'efficacité de diffraction en fonction de la longueur d'onde pour $\alpha = 0,3$ et $\alpha = 0,5$.

Dans le cas où les 2 longueurs d'onde racines $\lambda_1$ et $\lambda_2$ sont trop éloignées, le composant sera blazé à deux longueurs d'onde différentes : on aura deux bandes spectrales de fonctionnement, une autour de $\lambda_1$ et l'autre autour de $\lambda_2$, et dans chacune de ces bandes, la différence de phase reste proche de $2\pi$. C'est notamment le cas pour $\alpha = 1$, les deux longueurs d'onde de blaze $\lambda_1$ et $\lambda_2$ sont suffisamment éloignées pour être distinguées clairement.

Pour avoir une optique la plus achromatique possible, il faut donc choisir $\alpha > 0$. et de préférence $\alpha$ le plus grand possible: on obtient un composant large bande ou bi-bande. Cependant $\alpha$ ne peut pas prendre arbitrairement des valeurs très grandes, du fait des limitations sur les dimensions (taille et hauteur) des microstructures, dues aux contraintes de fabrication.

Sur les figures 6b et 7b, on a ainsi représenté de façon schématique, les limites haute et basse de fabrication. Par exemple, pour la structure de la figure 6a composée de trous cylindriques à section ronde répartis sur une grille carrée et gravés dans une couche de silicium, la limite haute est donnée pour $d_{max} \approx 0.8\Lambda_s$ et la limite basse est donnée pour $d_{min} \approx 0.13\Lambda_s$. On notera que ces contraintes de fabrication imposent une limite sur la plus petite microstructure de dimension non nulle et sur la plus grande structure de facteur de remplissage non égal à 1 ($d=\Lambda_s$). En pratique, les contraintes de fabrication entraînent que $\alpha$ ne peut pas être supérieur à un. Pour avoir $\alpha > 1$, on peut chercher à minimiser $\Delta n(\lambda_0)$ qui est le dénominateur de Eq.(5). Or si $\Delta n(\lambda_0)$ est petit, alors la hauteur h des microstructures (profondeur des trous ou hauteur des piliers) sera très importante, car h est relié à $\Delta n(\lambda_0)$ par la relation suivante : $h = \lambda_0/\Delta n(\lambda_0)$. En

d'autres termes $\alpha > 1$ entraîne une hauteur h trop importante, ce qui pose des problèmes de fabrication : on ne sait pas graver un très petit trou très profond ; on ne sait pas faire un pilier ou un trait très fin et très haut (ou épais).

Ainsi des éléments d'optique diffractive binaires, pour lesquels on aurait $\alpha > 1$ sont difficilement compatibles avec les contraintes de fabrication.

On a pu déterminer qu'il était possible, en tenant compte de toutes les contraintes de fabrication (profondeur de gravure et taille minimale et maximale des structures fabriquées), de définir des structures optimales d'éléments d'optique diffractive binaire pour lesquelles le paramètre de caractérisation $\alpha$ prend une valeur positive non nulle ($\alpha > 0$).

De préférence, on cherche à avoir le paramètre $\alpha$ compris entre 0,3 et 0,5, de préférence le plus proche de 0,5. En effet, pour $\alpha = 0.3$ et 0.5 l'efficacité est supérieure à 90% sur une, large bande spectrale autour de $\lambda_0$. La valeur $\alpha = 0.5$ est particulière: en effet, pour cette valeur, $\lambda_1 = \lambda_2 = \lambda_0$ et la pente de $\Delta\Phi(\lambda)$ est nulle. La variation de la différence de phase autour de ce point est donc très lente et l'efficacité présente un maximum plat.

A cette fin, il faut $\delta n_{min} - \delta n_{max} > 0$, soit $\delta n_{min} > \delta n_{max}$ et $\delta n_{min} - \delta n_{max} \geq \Delta n(\lambda_0)$. Il faut donc choisir les facteurs de remplissage des microstructures dans une zone d'indice effectif dans laquelle les microstructures correspondant à $n_{max}$ sont moins dispersives que celles donnant $n_{min}$. De façon pratique cela revient par exemple à choisir $\Delta n(\lambda_0)$ en fixant $n_{max} = n$, indice du matériau optique. Et on choisit le facteur de remplissage f sur la courbe qui va permettre d'avoir $\delta n_{min}$ le plus grand possible, compte tenu des limites de dimension imposées par les contraintes de fabrication sur les dimensions d et h.

Un moyen d'optimiser un élément d'optique diffractive binaire est donc, pour une microstructure de géométrie donnée, de choisir les trois quantités $\delta n_{min}$, $\delta n_{max}$, et $\Delta n(\lambda_0)$, en sorte que $\alpha$ soit strictement supérieur à 0 et de préférence compris entre 0,3 et 0,5 de préférence le plus proche de 0,5.

Ceci peut-être obtenu au moyen de microstructures de type trou. Si on reprend la figure 6b, on voit en effet que l'on peut choisir $n_{max}(\lambda_0)$ égal à l'indice du matériau, dans l'exemple, 2,1, codé par une microstructure de facteur de remplissage égal à 0, ce qui entraîne $\delta_{nmax}$ très petit égal à 0 ; et $\delta_{nmin}$ peut être choisi supérieur à $\delta_{nmax}$. Cependant, la valeur de $\delta_{nmin}$ va rapidement être limitée dans le domaine D délimité de fabrication, ce qui entraîne une valeur de $n_{min}(\lambda_0)$ pas très éloignée de celle de $n_{max}(\lambda_0)$ compte tenu de la pente de la courbe. On risque d'obtenir alors une valeur faible de $\Delta n(\lambda_0)$, ce qui entraînerait une profondeur de gravure h trop importante pour réaliser la fonction de variation de phase de 0 à $2\pi$.

Dans les microstructures à géométrie de type pilier, $\delta_{nmax}$ est nécessairement grand dans le domaine D de fabrication, et la valeur de $\Delta n(\lambda_0)$ sera plutôt grande, compte tenu de la pente de la courbe, mais on peut prendre $n_{max}(\lambda_0)$ égal à l'indice du matériau, dans l'exemple, 2,1, codé par une microstructure de facteur de remplissage égal à 1, ce qui entraîne $\delta_{nmax}$ très petit égal à 0. Mais en pratique, on évite de faire d'aussi grands piliers. Et dans la zone D de fabrication, on a alors $\delta_{nmin} \leq \delta_{nmax}$ ce qui conduit à une valeur de $\alpha$ qui peut être négative.

Dans l'invention, on a trouvé un autre moyen pour optimiser de façon très satisfaisante et plus facile à mettre en oeuvre, la valeur de $\alpha$, et qui consiste à utiliser deux géométries différentes de microstructures pour réaliser la variation d'indice effectif sur une période $\Lambda$ du réseau à réaliser.

Si on prend la figure 8, sur laquelle les courbes 1 et 2 sont les courbes de la figure 6b et les courbes 3 et 4 sont celles de la figure 7b, on voit que les indices effectifs varient de façon inverse pour ces deux géométries différentes de microstructure : pour des trous, l'indice effectif décroît avec le facteur de remplissage; et pour des piliers, il croît. En exploitant cette caractéristique, on bénéficie d'une plus grande plage de liberté quant aux valeurs des trois quantités $\delta_{nmin}$, $\delta_{nmax}$, et $\Delta n(\lambda_0)$ qui définissent le paramètre $\alpha$ de caractérisation de l'élément d'optique diffractive binaire.

Ainsi, un mode préféré de mise en oeuvre de l'invention est d'associer dans un même élément, deux géométries de microstructures différentes.

Plus précisément, il s'agit d'associer deux microstructures dont le profil de variation de l'indice effectif est l'inverse l'un de l'autre avec la définition de facteur de remplissage utilisée dans l'invention. Ainsi par exemple, dans un réseau à deux dimensions, on associe dans un même élément d'optique diffractive binaire, des microstructures de type trou à des microstructures de type pilier.

Par cette association de deux types de structures de différentes géométries, il est possible d'avoir de façon assez simple, sans sortir du domaine de fabrication (dimension d et hauteur h des microstructures), un $\delta n_{max}$ très petit, un $\delta n_{min}$ grand tout en ayant un petit $\Delta n(\lambda_0)$ pour obtenir le paramètre $\alpha$ le plus grand possible.

En pratique, le matériau optique utilisé peut être du verre, du dioxyde de titane, du nitrure de silicium pour des applications d'imagerie dans le domaine du visible, ou par exemple, du germanium, du silicium, pour des applications d'imagerie dans le domaine infrarouge.

De préférence, on choisit un matériau optique à fort indice n, ce qui permet de réduire la hauteur de gravure h.

Un procédé de fabrication d'une structure d'élément d'optique diffractive binaire comprend ainsi une étape de définition d'une zone de cet élément dans laquelle on prend (on calcule) les courbes de variation d'indice effectif, pour chacune des deux géométries de microstructures, à la longueur d'onde de conception $\lambda_0$ et pour une valeur limite notée $\lambda_\infty$ que l'on prend en pratique par exemple à égale $50\lambda_0$.

Puis on définit un point $n_{max}(\lambda_0)$, de préférence égal à l'indice du matériau optique et on cherche à définir le

point $n_{min}(\lambda_0)$ de façon à optimiser les paramètres: $\delta n_{min}$, $\delta n_{max}$, et $\Delta n(\lambda_0)$.

Les contraintes de fabrication : dimension d des microstructures (diamètre ou largeur), et hauteur h= $\lambda_0/\Delta n(\lambda_0)$ des microstructures déterminent le domaine D utilisable (en dehors des points correspondant à f=0 et f=1).

Quand on a défini les deux extrêmes, on échantillonne la portion de courbe du matériau artificiel composite ainsi défini, qui comprend une portion de courbe associée à la microstructure de type trou et une portion de courbe associée à la microstructure de type pilier.

Sur la figure 8, on a représenté les courbes de variation d'indice effectif pour des microstructures de type trou (courbes 1 et 2) et des microstructures de type pilier (courbes 3 et 4) correspondant respectivement aux courbes des figures 6b et 7b.

Pour le matériau composite décrit à la figure 9a, on s'est ainsi placé dans la gamme d'indice effectif entre 1,5 et 2,1, avec $\Lambda_s=\lambda_0/2$. Huit périodes $\Lambda_s$ codent la zone diffractive, ce qui définit 8 points. Le premier point est codé par f=0 par une microstructure de type trou. Le dernier point est codé par une microstructure de type pilier codé avec f=0.68.

Plus précisément la zone Z de l'élément d'optique diffractive binaire optimisée selon invention et représentée sur la figure 9a est une zone d'un réseau binaire de période A égale à $25\lambda_0$. Le motif de cette zone Z est ainsi répété de façon périodique.

Il a été réalisé dans du nitrure de silicium $Si_3N_4$ (n=2,1) avec des géométries de trous cylindriques à section ronde et de piliers à section carrée gravés. Dans ce réseau, la profondeur h de gravure est de $1,875\lambda_0$ et la période d'échantillonnage $\Lambda_s$ est de $\lambda_0/2$. L'indice effectif maximum $n_{max}$ est codé à l'aide de trous de diamètre nul ($n_{max} = n = 2.1$) et l'indice effectif minimal $n_{min}$ est codé à l'aide de piliers de facteur=0,68, soit de largeur $d=0.34\lambda_0$.

Dans ce réseau blazé binaire à matériau artificiel composite, on a $\alpha = 0.39$.

L'efficacité de diffraction de ce réseau a été calculée de façon rigoureuse en fonction de la longueur d'onde d'illumination, pour un réseau illuminé en incidence normale en lumière non polarisée. Ce calcul a été effectué selon une analyse des ondes couplées rigoureuse dite RCWA, et décrite notamment dans l'article suivant : "Formulation for stable and efficient implementation of the rigorous coupled-wave analysis of binary gratings" par M.G. Moharam, E.B. Grann, D.A. Pommet et T.K. Gaylord, publié dans Journal Opt. Soc. Am. A 12, 1068-1076 (1995).

La courbe d'efficacité de diffraction en fonction de la longueur d'onde est donnée à la figure 9b : on obtient bien une zone de méplat assez large dans laquelle l'efficacité de diffraction est de 96% et reste au-dessus de 90% entre $0.6\lambda_0$ et $1,5\lambda_0$. L'efficacité de diffraction n'atteint pas 100% en pratique à cause des discontinuités du profil de surface quand on passe d'un type de géométrie à un autre. Au niveau de la discontinuité, on a un effet d'ombrage et un effet de discontinuité de phase. L'efficacité de diffraction de ce réseau a été calculée pour une période de réseau A égale à $257\lambda_0$. Lorsque l'on a une période supérieure, l'effet des discontinuités est moindre, et l'efficacité est donc meilleure. A une période inférieure à $25\lambda_0$, l'effet des discontinuités est plus important et on perd en efficacité. On obtient une moins bonne largeur spectrale, mais amélioration de la largeur de bande peut être satisfaisante pour certaines applications. Ainsi, invention ne se limite pas à des composants opérant dans le domaine scalaire.

Si on reprend la courbe de la figure 9b, on observe quelques oscillations pour les faibles longueurs d'onde, résultant d'un mode de propagation multi-mode. En effet aux faibles longueurs d'onde le rapport $\Lambda_s/\lambda$ est supérieur à la valeur de coupure structurelle et les microstructures sub-longueur d'onde peuvent admettre plusieurs modes de propagation d'onde. L'analogie avec un matériau artificiel homogène est de moins en moins valide pour ces valeurs faibles de $\lambda$.

Cependant, la Figure 9b démontre bien la possibilité d'obtenir grâce aux propriétés de dispersion des milieux artificiels des EOD-B, un composant achromatique avec une forte efficacité.

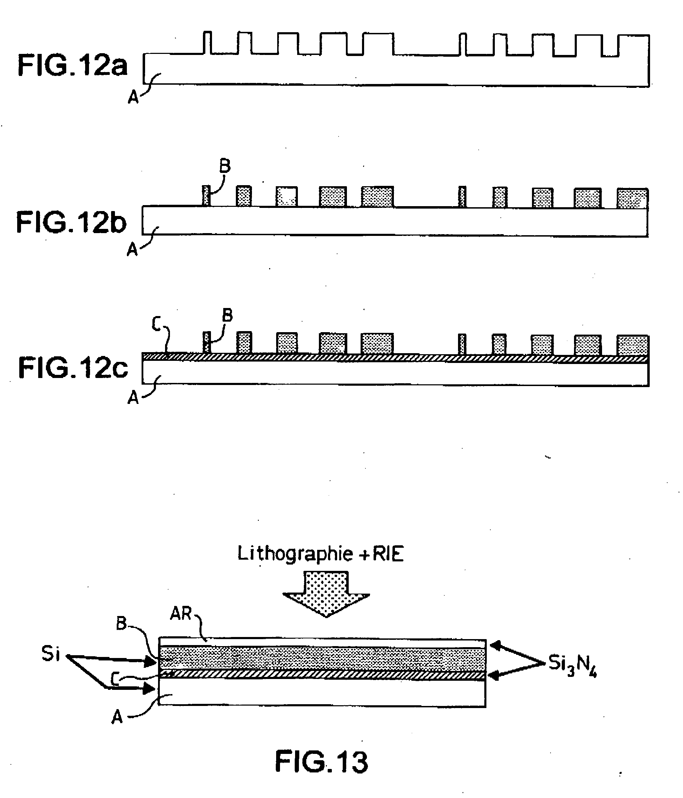

Les techniques de fabrication de tels éléments EOD-B sont celles de l'état de l'art, dont quelques-unes sont schématisées sur les figures 12a à 12c et la figure 13.

Sur la figure 12a, les microstructures sont gravées dans le substrat optique A. Cependant on maîtrise mal la hauteur de gravure.

On préfère ainsi, comme représenté sur la figure 12b, déposer une couche de matériau optique B sur un substrat optique A (le même matériau peut-être utilisé pour les deux), et graver la couche de matériau déposée.

On peut prévoir une couche d'arrêt C dans un matériau différent, déposée entre le substrat et la couche de matériau qui doit être gravée, comme représenté sur la figure 12c.

De préférence, on prévoit une couche anti-reflet AR sur les piliers et entre les trous, qui peut être déposée sur la surface après gravure des microstructures, ou comme représenté sur la figure 13, en utilisant un substrat multi-couches, formé du substrat de base A, d'une couche d'arrêt C, de la couche optique B à graver, et d'une couche anti-reflet AR.

L'invention permet l'utilisation des optiques blazées binaires pour des applications à large bande spectrale, c'est à dire d'une largeur de l'ordre d'une octave centrée sur la longueur d'onde, et bi-bande spectrale, ouvrant des perspectives d'utilisation fort intéressantes pour le domaine de l'imagerie pour utilisation dans l'infrarouge, notamment l'infrarouge thermique et dans le visible.

La dispersion de l'indice effectif des matériaux artificiels permet ainsi de compenser partiellement la chute de l'efficacité avec la longueur d'onde qui se produit normalement dans les composants diffractifs standards. Cette compensation est particulièrement intéressante à mettre en oeuvre dans des matériaux artificiels composites.

**Revendications**

1. Elément d'optique diffractive de type binaire à effet blazé, comprenant une ou des zones optiques, une zone formant un matériau artificiel composite à variation d'indice effectif, comprenant des microstructures binaires sub-longueur d'onde à facteur de remplissage variable d'un premier type de géométrie ($m_1$) dans une première portion et d'un deuxième type de géométrie ($m_2$) dans une deuxième portion, gravées en surface d'un matériau optique d'indice donné (n), le premier type correspondant à des microstructures de type trou, ayant un indice effectif qui décroît avec le facteur de remplissage, le deuxième type correspondant à des microstructures de type pilier ayant un indice effectif qui croît avec le facteur de remplissage, l'indice effectif dudit matériau artificiel variant entre une valeur minimum et une valeur maximum, la valeur minimum, respectivement maximum de l'indice effectif correspondant à la plus grande fraction, respectivement la plus petite, de matériau enlevé pour réaliser une microstructure, **caractérisé en ce que** l'effet blazé est obtenu sur une large bande spectrale, lesdits indices effectifs minimum et maximum étant déterminés à partir des courbes de variation de l'indice effectif avec le facteur de remplissage des microstructures obtenues à la longueur d'onde de conception et à une longueur d'onde $\lambda_\infty$ grande devant la longueur d'onde de conception $\lambda_0$, pour obtenir une valeur optimale strictement supérieure à 0 d'un paramètre de caractérisation $\alpha$

de la dite zone optique, ledit paramètre étant donné par l'équation : $\alpha = \dfrac{(\delta n_{min} - \delta n_{max})}{\Delta n(\lambda_0)}$, où $\Delta n(\lambda_0) = n_{max}(\lambda_0)$

- $n_{min}(\lambda_0)$, $\delta n_{min} = n_{min}(\lambda_0) - n_{min}(\lambda_\infty)$ et $\delta n_{max} = n_{max}(\lambda_0) - n_{max}(\lambda\infty)$ où $n_{max}$, respectivement $n_{min}$ sont les valeurs de l'indice effectif maximum, respectivement minimum, à la longueur d'onde considérée.

2. Elément d'optique selon la revendication 1, **caractérisé en ce qu'**il comprend en outre une ou des zones formées uniquement de microstructures selon l'une parmi la première ou la deuxième géométrie.

3. Elément d'optique selon l'une des revendications précédentes, **caractérisé en ce que** le matériau optique est à indice de réfraction (n) élevé.

4. Elément d'optique selon l'une quelconque des revendications précédentes, correspondant à une synthèse binaire d'un réseau échelette de période A déterminée, **caractérisé en ce que** chaque zone optique de la microstructure correspond à un échelon (e) du réseau échelette.

5. Elément d'optique diffractive selon l'une quelconque des revendications 1 à 3, **caractérisé en ce que** chaque zone optique dudit élément correspond à une zone (z1) d'une lentille de Fresnel.

6. Elément d'optique selon la revendication précédente, **caractérisé en ce que** la zone optique est définie pour avoir $0{,}3 \leq \alpha \leq 0{,}5$.

7. Système optique, pour une utilisation en imagerie à large bande spectrale ou en bi-bande spectrale comprenant un élément d'optique diffractive selon l'une quelconque des revendications 1 à 6 précédentes.

8. Système optique selon la revendication 7, pour de l'imagerie infrarouge.

9. Système optique selon la revendication 7, pour de l'imagerie dans le domaine du visible.

**Claims**

1. Diffractive optical element of blazed-effect binary type, comprising one or more optical zones, a zone forming a composite artificial material with variation of effective index, comprising sub-wavelength binary microstructures with variable fill factor of a first type of geometry ($m_1$) in a first portion and of a second type of geometry ($m_2$) in a second portion, which are etched on the surface of an optical material of given index (n), the first type corresponding to microstructures of the hole type, having an effective index which decreases with the fill factor, the second type corresponding to microstructures of pillar type having an effective index which increases with the fill factor, the effective index of said artificial material varying between a minimum value and a maximum value, the minimum, respectively maximum value of the effective index corresponding to the largest fraction, respectively smallest, of material removed in order to produce a microstructure, **characterized in that** the blazed effect is obtained over a wide spectral band, said minimum and maximum effective indices being determined from curves of variation in the effective index with the fill factor of the microstructures, which are obtained at the design wavelength and at a wavelength $\lambda_\infty$ which is large compared with the design wavelength $\lambda_0$, so as to obtain an optimum value strictly greater than 0 for a characterization parameter $\alpha$ of said optical zone, said parameter being given by the equation:

$$\alpha = \frac{(\delta n_{min} - \delta n_{max})}{\Delta n(\lambda_0)}$$ , where $\Delta n(\lambda_0) = n_{max}(\lambda_0) - n_{min}(\lambda_0)$, $\delta n_{min} = n_{min}(\lambda_0) - n_{mi}(\lambda_\infty)$ and $\delta n_{max} = n_{max}(\lambda_0) - n_{max}(\lambda_\infty)$, where $n_{max}$ and $n_{min}$ are respectively the values of the maximum and minimum effective index at the wavelength in question.

2. Optical element according to Claim 1, **characterized in that** it also comprises one or more zones formed only by microstructures according to either the first or second geometry.

3. Optical element according to either of the preceding claims, **characterized in that** the optical material has a high refractive index (n).

4. Optical element according to any one of the preceding claims, corresponding to a binary synthesis of an échelette grating having a determined period A, **characterized in that** each optical zone of the microstructure corresponds to an echelon (e) of the échelette grating.

5. Optical element according to any one of Claims 1 to 3, **characterized in that** each optical zone of said element corresponds to a zone (z1) of a Fresnel lens.

6. Optical element according to the preceding claim, **characterized in that** the optical zone is defined to have $0.3 \leq \alpha \leq 0.5$.

7. Optical system for use in imaging with a wide spectral band or in a dual spectral band, comprising a diffractive optical element according to any one of the preceding Claims 1 to 6.

8. Optical system according to Claim 7, for infrared imaging.

9. Optical system according to Claim 7, for imaging in the visible range.

**Patentansprüche**

1. Beugungsoptik-Element vom binären Typ mit Blaze-Wirkung, das eine oder mehrere optische Zonen aufweist, wobei eine Zone einen künstlichen Verbundwerkstoff mit effektiver Indexänderung bildet, das binäre Unterwellenlängen-Mikrostrukturen mit variablem Füllfaktor eines ersten Geometrietyps ($m_1$) in einem ersten Abschnitt und eines zweiten Geometrietyps ($m_2$) in einem zweiten Abschnitt aufweist, die an der Oberfläche eines optischen Werkstoffs mit gegebenem Index (n) eingeätzt sind, wobei der erste Typ Mikrostrukturen vom Typ Loch entspricht, die einen effektiven Index haben, der mit dem Füllfaktor abnimmt, während der zweite Typ Mikrostrukturen vom Typ Säule entspricht, die einen effektiven Index haben, der mit dem Füllfaktor zunimmt, wobei der effektive Index des künstlichen Werkstoffs zwischen einem minimalen Wert und einem maximalen Wert variiert, wobei der minimale bzw. maximale Wert des effektiven Index dem größten bzw. dem kleinsten Bruchteil von zur Herstellung einer Mikrostruktur entferntem Werkstoff entspricht, **dadurch gekennzeichnet, dass** die Blaze-Wirkung in einem breiten Spektralband erhalten wird, wobei der minimale und der maximale effektive Index ausgehend von den Veränderungskurven des effektiven Index mit dem Füllfaktor der Mikrostrukturen bestimmt werden, die mit der Design-Wellenlänge und mit einer Wellenlänge $\lambda_\infty$ erhalten werden, die gegenüber der Design-Wellenlänge $\lambda_0$ groß ist, um einen optimalen Wert strikt größer als 0 eines Charakterisierungsparameters $\alpha$ der optischen Zone zu erhalten, wobei der Parameter

durch die Gleichung: $\alpha = \frac{(\delta n_{min} - \delta n_{max})}{\Delta n(\lambda_0)}$ angegeben wird, wobei gilt An $(\lambda_0) = n_{max}(\lambda_0) - n_{min}(\lambda_0)$, $\delta n_{min} = n_{min}$

$(\lambda_0)$ -$n_{min}$ $(\lambda_\infty)$ und $\delta n_{max}=n_{max}(\lambda_0)-n_{max}(\lambda_\infty)$, wobei $n_{max}$ bzw. $n_{min}$ die Werte des maximalen bzw. minimalen effektiven Index bei der betrachteten Wellenlänge sind.

2. Optikelement nach Anspruch 1, **dadurch gekennzeichnet, dass** es außerdem eine oder mehrere Zonen enthält, die nur von Mikrostrukturen gemäß entweder der ersten oder der zweiten Geometrie geformt werden.

3. Optikelement nach einem der vorhergehenden Ansprüche, **dadurch gekennzeichnet, dass** der optische Werkstoff einen hohen Brechungsindex (n) hat.

4. Optikelement nach einem der vorhergehenden Ansprüche entsprechend einer binären Synthese eines Echelette-Gitters mit bestimmter Periode A, **dadurch gekennzeichnet, dass** jede optische Zone der Mikrostruktur einer Stufe (e) des Echelette-Gitters entspricht.

5. Beugungsoptik-Element nach einem der Ansprüche 1 bis 3, **dadurch gekennzeichnet, dass** jede optische Zone des Elements einer Zone (z1) einer Fresnel-Linse entspricht.

6. Optikelement nach dem vorhergehenden Anspruch, **dadurch gekennzeichnet, dass** die optische Zone definiert ist, um $0,3 \leq \alpha \leq 0,5$ zu erhalten.

7. Optisches System für eine Verwendung in der Bilderzeugung mit breitem Spektralband oder im Bispektralband, das ein Beugungsoptik-Element nach einem der vorhergehenden Ansprüche 1 bis 6 aufweist.

8. Optisches System nach Anspruch 7 für eine Infrarot-Bilderzeugung.

9. Optisches System nach Anspruch 7 für eine Bilderzeugung im sichtbaren Bereich.

FIG.1

FIG.2A

FIG.2B

FIG.2C

FIG.3a

FIG.3b

**FIG.4**

**FIG.5**

FIG.6a

FIG.6b

FIG.7a

FIG.7b

Structures fabricables

FIG.8

FIG.9a

FIG.9b

**FIG.10a**

$\Lambda$    $\Lambda$    $\Lambda$    $0x$

$\Lambda_s$    $\Lambda_s$    $\Lambda_s$    $m_1$   $m_2$

**FIG.10b**

**FIG.10c**

$Z1$    $Z2$    $Z3$

$\Lambda_s$    $\Lambda_s$   $\Lambda_s$   $\Lambda_s$    $m_1$   $m_2$

**FIG.10d**

18

FIG.11

**FIG.12a**

**FIG.12b**

**FIG.12c**

Lithographie + RIE

**FIG.13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- On the effective medium theory of subwavelength periodic structures. *Journal of Modem Optics,* 1996, vol. 43 (10), 2063-2085
- **Ph. Lalanne ; S. Astilean ; P. Chavel ; E. Cambril ; H. Launois.** Blazed-Binary subwavelength gratings with efficiencies larger than those of conventional échelette gratings. *Optical Letters,* 1998, vol. 23, 552-554
- **F.T. Chen ; H.G. Craighead.** Diffractive phase éléments based on two dimensionnal artificial dielectrics. *Optic Letters,* vol. 20 (2
- **M.G. Moharam ; E.B. Grann ; D.A. Pommet ; T.K. Gaylord.** Formulation for stable and efficient implementation of the rigorous coupled-wave analysis of binary gratings. *Journal Opt. Soc. Am. A,* 1995, vol. 12, 1068-1076